Europäisches Patentamt

(19) European Patent Office

Office européen des brevets

(11) Publication number: **0 289 149**
**A1**

## (12) EUROPEAN PATENT APPLICATION

(21) Application number: 88303009.0

(22) Date of filing: 05.04.88

(51) Int. Cl.⁴: **B60R 1/06**

(30) Priority: 25.04.87 GB 8709850

(43) Date of publication of application:
**02.11.88 Bulletin 88/44**

(84) Designated Contracting States:
**DE ES FR GB**

(71) Applicant: **Britax Limited**
**Kingsham Road**
**Chichester, West Sussex P019 2UG(GB)**

(72) Inventor: **Cunningham, Douglas James**
**42 Viking Way**
**Horndean Portsmouht Hampshire(GB)**
Inventor: **Assinder, Andrew John**
**47 Crossbush Road**
**Summerley Bognor Regis West Sussex(GB)**

(74) Representative: **Hollinghurst, Antony**
**Britax Limited Patent Department**
**Chichester West Sussex PO19 2AQ(GB)**

(54) **Rear view mirror.**

(57) An exterior mirror for a motor vehicle comprises a housing (10) adapted to be mounted on a vehicle body and a reflective member (12) mounted in said housing (10) by means of a bearing which includes an intermediate member (20, 38) having first and second bearing surfaces. The first bearing surface (22) is of convex part-cylindrical shape centred on a first pivot axis and is adapted to engage with a concave part-cylindrical bearing surface (18, 36) of equal radius fast with the housing (10). The second bearing surface (24, 26) is adapted to engage with a bearing surface (34) on the reflective member (12) so as to permit relative angular movement about a second pivot axis orthogonal to the first pivot axis while preventing relative angular movement about an axis perpendicular to the plane of the reflective member (12). In addition, the bearing has means for inhibiting translational movement of the intermediate member (20, 38) relative to the housing (10) parallel to the first pivot axis, means (30, 32) for inhibiting translational movement of the intermediate member (20, 38) relative to the reflective member (12) parallel to the second pivot axis.

FIG.1.

## REAR VIEW MIRROR

This invention relates to a rear view mirror for a motor vehicle, of the type which has a reflective member mounted in a housing so that its orientation is adjustable relative to such housing. The invention has particular, but not exclusive, application to exterior mirrors of the type in which the orientation of the reflective member can be adjusted remotely.

In order to permit full adjustment of such an exterior mirror, it is necessary for the orientation of the reflective member to be adjustable about two mutually orthogonal axes which lie parallel to the plane of the reflective member when the latter is centrally orientated within its range of adjustments. At the same time, movement about a third axis orthogonal to both of the two aforesaid axes must be restricted in order to prevent the edges of the reflective member from colliding with adjacent walls of the housing. Preferably, the two first-mentioned axes are as close as possible to the plane of the reflective member, in order to minimise the clearance which has to be provided between the edges of the reflective member and the adjacent walls of the housing to accomodate lateral movement of the reflective member during adjustment of its oreintation. This invention is concerned with the provision of a bearing for the reflective member which meets these criteria.

According to the invention, an exterior mirror for a motor vehicle comprises a housing adapted to be mounted on a vehicle body and a reflective member mounted in said housing by means of a bearing which includes an intermediate member having first and second bearing surfaces, the first bearing surface being of convex part-cylindrical shape centred on a first pivot axis and adapted to engage with a concave part-cylindrical bearing surface of equal radius fast with the housing, and the second bearing surface being adapted to engage with a bearing surface on the reflective member to permit relative angular movement about a second pivot axis orthogonal to the first pivot axis while preventing relative angular movement about an axis perpendicular to the plane of the reflective member, the bearing further comprising means for inhibiting translational movement of the intermediate member relative to the housing parallel to the first pivot axis, and means for inhibiting translational movement of the intermediate member relative to the reflective member parallel to the second pivot axis.

In one form of the invention, one of the second bearing surface on the intermediate member and the bearing surface on the reflective member comprises a V-shaped rib oriented with its apex coincident with the second pivot axis, the means for inhibiting translational movement of the intermediate member relative to the reflective member parallel to the second pivot axis comprises a respective side wall on each side of the rib and extending parallel thereto, and the other of said bearing surfaces comprises a rectangular formation adapted to be a loose fit between the side walls while engaging with the V-shaped rib.

In another form of the invention, the second bearing surface on the intermediate member is of concave part-cylindrical shape with its cylinder axis forming the second pivot axis, and the bearing surface on the reflective member is of concave part-cylindrical shape of radius equal to that of the second bearing surface on the intermediate member.

Preferably each of the pivot axes is disposed closely adjacent to the plane of the reflective member.

Two embodiments of the invention will now be described, by way of example, with reference to the accompanying drawings, in which:

Figure 1 is a partly broken way partly exploded perspective view of an exterior mirror in accordance with the invention; and

Figure 2 is an exploded perspective view of part of another embodiment of the invention.

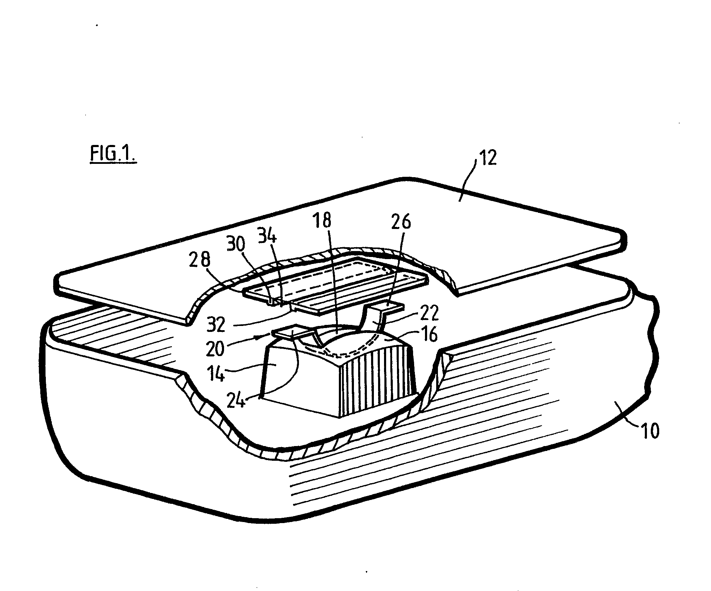

Figure 1 shows an exterior rear view mirror for a motor car comprising a housing 10 which is open on one side and has a reflective member 12 located therein. Centrally located on the inside of the housing 12 is a plinth 14 having a part spherical upper surface 16 (as viewed in Figure 1) with a rectangular slot 18 therein. The base of the slot 18 is of part-cylindrical shape.

An intermediate member 20, formed from metal strip, has a central half-cylindrical zone 22, of the same radius as the bottom of the slot 18 and of width such as to be a loose bit therein. The intermediate member 20 also has two flat end regions 24 and 26 which are parallel to the reflective member 12 when the orientation of the latter is substantially in the centre of its range of adjustment.

The reflective member 12 has a bearing plate 28 secured to its rear surface. On the opposite surface to that abutting the reflective member 12, the bearing plate 28 has two parallel ribs 30 and 32 spaced apart so as to be a loose fit on each side of the end regions 24 and 26 of the intermediate member 20. Between the rectangular ribs 30 and 32 is a V-shaped rib 34 which abuts against the flat surfaces of the end regions 24 and 26 of the intermediate member. Spring means (not shown) are arranged to pull the reflective member 12 towards the interior of the housing 10 so as to urge the above-described abutting surfaces towards one another.

The axis of the cylindrical part 22 of the intermediate member 20 is arranged to be coincident with the rear surface of the reflective member 12. In use, the orientation of the mirror can be adjusted about this axis by relative movement betweeen the intermediate member 20 and the plinth 14. Adjustment of the orientation of the reflective member 12 about an axis coincident with the apex of the V-shaped rib 34 is effected by angular movement of the bearing plate 28 relative to the intermediate member 20. Since both of these axes are very close to the plane of the reflective member 12, the clearance which has to be allowed between the edges of the reflective member 12 and the adjacent walls of the housing 10 is minimised.

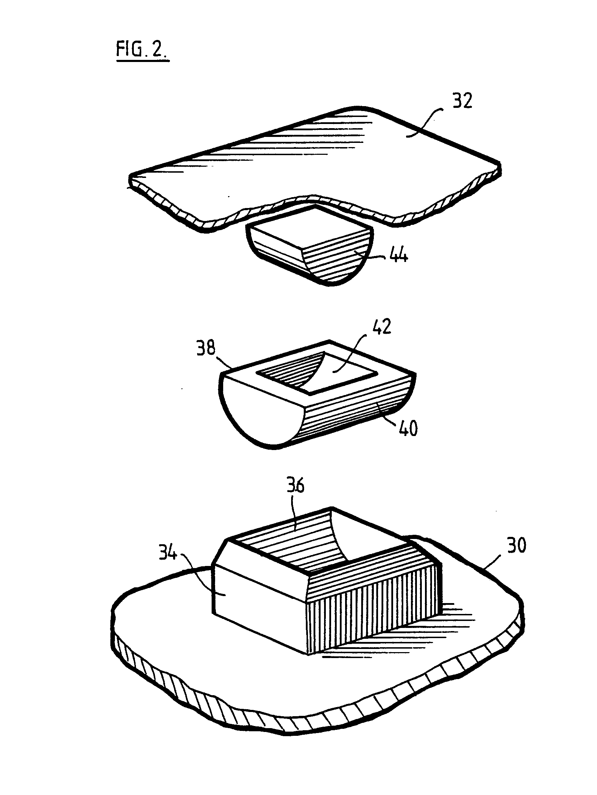

Figure 2 illustrates another embodiment of the invention having a housing 30 and a reflective member 32. Most of the housing 30 and the reflective member 32 are not shown but they are of generally similar shape to the corresponding components of the embodiment illustrated in Figure 1. A plinth 34 is located centrally on the interior of the housing 30 and has a part cylindrical recess 36 in its upper surface. An intermediate member 38 has a part-cylindrical outer surface 40 arranged to be a sliding fit in the recess 36. In turn, the intermediate member 38 has a part-cylindrical recess 42 in the surface opposite to the part-cylindrical surface 40, the axes of the two part-cylindrical surfaces being perpendicular to one another. A part-cylindrical bearing member 44, dimensioned to engage in the recess 42, is secured to the back of the reflective member 32. The axes of the part-cylindrical surfaces 40 and 42 of the intermediate member 38 can, of course, be located further from the plinth 34 than the outer surface of the bearing member 44. They are preferably both arranged to lie in a plane contained within the thickness of the reflective member. Operation is similar to that of the embodiment shown in Figure 1, the reflective member 32 and the housing 30 being urged towards one another by spring means (not shown).

The embodiment of Figure 2 has the advantage that both axes of angular movement can be arranged to lie within the thickness of the reflective member 32. With the embodiment shown in Figure 1, the axis formed by the rib 34, must, of necessity, be behind the reflective member.

## Claims

1. An exterior mirror for a motor vehicle comprising a housing (10) adapted to be mounted on a vehicle body and a reflective member (12) mounted in said housing (10) by means of a bearing, characterised in that the bearing includes an intermediate member (20, 38) having first and second bearing surfaces (22, 40; 24, 26, 42), the first bearing surface (22, 40) being of convex part-cylindrical shape centred on a first pivot axis and adapted to engage with a concave part-cylindrical bearing surface (18, 36) of equal radius fast with the housing (10), and the second bearing surface (24, 26, 42) being adapted to engage with a bearing surface (34, 44) on the reflective member (12) to permit relative angular movement about a second pivot axis orthogonal to the first pivot axis while preventing relative angular movement about an axis perpendicular to the plane of the reflective member (12), the bearing further comprising means for inhibiting translational movement of the intermediate member (20, 38) relative to the housing (10) parallel to the first pivot axis, and means (30, 32) for inhibiting translational movement of the intermediate member (20, 38) relative to the reflective member (12) parallel to the second pivot axis.

2. An exterior mirror for a motor vehicle according to claim 1, wherein one of the second bearing surface on the intermediate member (20) and the bearing surface on the reflective member (12) comprises a V-shaped rib (34) oriented with its apex coincident with the second pivot axis, and the means for inhibiting translational movement of the intermediate member (20) relative to the reflective member (12) parallel to the second pivot axis comprises a respective side wall (30, 32) on each side of the rib (34) and extending parallel thereto, and the other of said bearing surfaces comprises a rectangular formation (24, 26) adapted to be a loose fit between the side walls (30, 32) while engaging with the V-shaped rib (34).

3. An exterior mirror for a motor vehicle according to claim 1, wherein the second bearing surface (42) on the intermediate member (20, 38) is of concave part-cylindrical shape with its cylinder axis forming the second pivot axis, and the bearing surface (44) on the reflective member (12) is of concave part-cylindrical shape of radius equal to that of the second bearing surface (42) on the intermediate member (38).

4. An exterior mirror for a motor vehicle according to claim 1, 2 or 3, wherein each of the pivot axes is disposed closely adjacent to the plane of the reflective member (12).

FIG.1.

0 289 149

## FIG. 2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 142 424 (KLEIN) <br> * Column 2, line 20 - column 3, line 10; figures 1-19 * | 1 | B 60 R 1/06 |
| A | | 2-4 | |
| A | FR-A-2 539 361 (HARMAN AUTOMOTIVE) <br> * Claim 1; figures 1-5 * | 1-4 | |

TECHNICAL FIELDS SEARCHED (Int. Cl.4)

B 60 R

The present search report has been drawn up for all claims

| Place of search | Date of completion of the search | Examiner |
|---|---|---|
| THE HAGUE | 26-06-1988 | MAUSSER, T. |